Europäisches Patentamt

(19) European Patent Office

Office européen des brevets

(11) Publication number: **0 061 901**
**B1**

(12) **EUROPEAN PATENT SPECIFICATION**

(45) Date of publication of patent specification: **27.08.86**

(21) Application number: **82301578.9**

(22) Date of filing: **25.03.82**

(51) Int. Cl.⁴: **G 02 B 6/10, C 03 B 37/025**

(54) Optical waveguide fiber, and methods of forming an optical waveguide fiber, and an optical waveguide preform.

(30) Priority: **30.03.81 US 248947**
**30.03.81 US 249022**
**13.04.81 US 253224**

(43) Date of publication of application:
**06.10.82 Bulletin 82/40**

(45) Publication of the grant of the patent:
**27.08.86 Bulletin 86/35**

(84) Designated Contracting States:
**AT BE CH DE FR GB IT LI NL SE**

(56) References cited:
**EP-A-0 032 390**
**DE-A-2 930 791**
**GB-A-2 012 983**
**GB-A-2 022 571**
**GB-A-2 032 910**
**US-A-4 165 223**

**APPLIED OPTICS, vol. 19, no. 12, 15th June
1980, pages 2000-2006; G.W. SCHERER:
"Stress-induced index profile distortion in
optical waveguides"**

**ELECTRONIC LETTERS, vol. 14, no. 5, 2nd
March 1978, pages 143-144; V. RAMASWAMY
et al.: "Influence of noncircular core on the
polarisation performance of single mode
fibres"**

(73) Proprietor: **Corning Glass Works
Houghton Park
Corning New York 14831 (US)**

(72) Inventor: **Blankenship, Michael Gregg
Morrcrest Drive, R.D.
Corning New York (US)**
Inventor: **Keck, Donald Bruce
Chequers Circle
Big Flats New York (US)**
Inventor: **Sarkar, Arnab
273 Orchard Drive
Big Flats New York (US)**

(74) Representative: **Boon, Graham Anthony et al
Elkington and Fife High Holborn House 52/54
High Holborn
London, WC1V 6SH (GB)**

Courier Press, Leamington Spa, England.

(56) References cited:

**IEEE JOURNAL OF QUANTUM ELECTRONICS, vol. QE-17, no. 1, January 1981, pages 15-22, New York (USA); I.P. KAMINOW: "Polarization in optical fibers"**

**IEEE JOURNAL OF QUANTUM ELECTRONICS, vol. QE-16, no. 11, November 1980, pages 1267-71, New York (USA); NOBUYUKI IMOTO et al.: "Birefringence in single-mode optical fiber due to elliptical core deformation and stress anisotropy"**

**ELECTRONIC LETTERS, vol. 17, no. 5, 5th March 1981, pages 191-193, London (GB); T. HOSAKA et al.: "Single mode fibres with asymmetrical refractive index pits on both sides of core"**

## Description

This invention relates to an optical waveguide fiber.

In many applications of single mode optical waveguides, e.g. gyroscopes, sensors and the like, it is important that the propagating optical signal retain the polarization characteristics of the input light in the presence of external depolarizing perturbations. This requires the waveguide to have an azimuthal asymmetry of the refractive index profile.

A slight improvement in the polarization performance of single mode optical waveguides is achieved by distorting the fiber core symmetry as a means of decoupling the differently polarized waves. Two such optical fiber waveguides are disclosed in US—A—4,184,859 and in the publication by V. Ramaswamy et al., "Influence of Noncircular Core on the Polarisation Performance of Single Mode Fibers", Electronics Letters, Vol. 14, No. 5, pp, 143—144, 1978. However, the Ramaswamy publication reports that measurements on borosilicate fibers with noncircular cores indicate that the noncircular geometry and the associated stress-induced birefringence alone are not sufficient to maintain polarization in single mode fibers.

The invention disclosed in GB—A—2,012,983A is based upon the recognition that orthogonally polarized waves are more efficiently decoupled in a waveguide that is fabricated in such a manner as to deliberately enhance stress-induced, or strain birefringence. That patent specification teaches that such behaviour is accomplished by introducing a geometrical and material asymmetry in the preform from which the optical fiber is drawn. The strain-induced birefringence is introduced by at least partially surrounding the single mode waveguide by an outer jacket having a different thermal coefficient of expansion (TCE) than that of the waveguide and a thickness along one direction that is different from its thickness along a direction orthogonal to the one direction. For example, the preform may be a three-layered structure comprising an inner core region surrounded by a cladding layer which is in turn surrounded by an outer jacket layer having a TCE different from that of the cladding layer. Diametrically opposed portions of the outer layer are ground away, and the resultant preform is drawn into a fiber approximating a slab configuration in which the thicknesses of the outer jacket layer are different in two orthogonal directions. A similar result can be accomplished by constructing the preform from an inner core region, a cladding region and two outer jacket layers oppositely disposed along the longitudinal surface of the preform. Difficulty can be encountered in the manufacture of that type of preform since stress is built up in the outer layer. When grinding the outer layer or when cutting slots therein, the built-up stress has a tendency to cause the preform to break. Assuming that a fiber can be drawn from the preform, the stress-forming outer layer is far removed from the fiber core and therefore, the effect of the stress on the core is minimal.

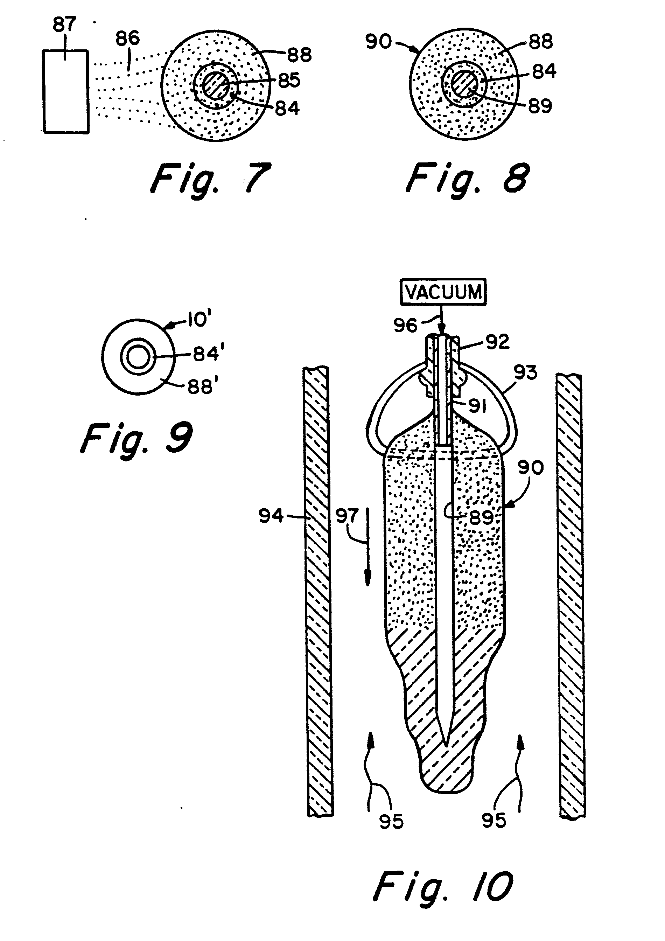

In one embodiment of GB—A—2,012,983 represented by Figures 10—15, a relatively thick substrate tube forms the outer portion of the optical fiber. In order to impart to the fiber the desired characteristics, either the inner or outer surface of the substrate tube is non-circular. Because at least a portion of the substrate wall must be relatively thick, the efficiency of deposition is adversely affected. Also, since the substrate tube forms the outer, compressive layer of the fiber, commercially available tubes may not be usable in the process unless they fortuitously possess the desired expansion and/or viscosity characteristics of the resultant fiber outer layer.

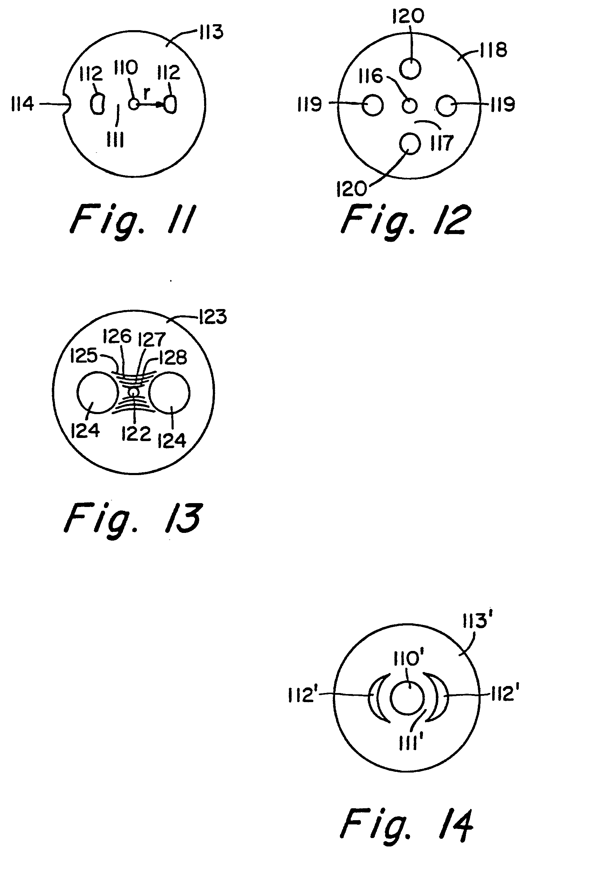

In a fiber such as that illustrated in Figure 12 of GB—A—2,012,983, the outer layer 60 of cladding is referred to herein as the stress cladding. It has been found that the stress σ at the core of a circularly symmetric single mode optical waveguide fiber is equal to the product of f×g where f is a function of geometrical factors and g is a function of glass factors. The function f is given by the equation

$$f = \frac{A_{sc}}{A_f} \qquad (1)$$

where $A_{sc}$ is the cross-sectional area of the stress cladding and $A_f$ is the total cross-sectional area of the fiber. The function f can therefore have a value such that $o < f < 1$. The function g is given by the equation

$$g = \frac{E(\Delta^a)\Delta T}{2(1-v)} \qquad (2)$$

where E is the effective elastic modulus of the fiber, $\Delta^a$ is the difference between the TCE of the stress cladding and the TCE of the remainder of the fiber, $\Delta T$ is the difference between the lowest set point of the glasses of which the fiber is comprised at room temperature and v is Poissons ratio. Since the aforementioned definition of stress σ generally applies also to non-symmetrical fibers such as those disclosed in GB—A—2,012,983, it is necessary to maximize f to obtain the greatest core stress and thus obtain the greatest stress birefringence. Values of f greater than 0.9 should be achieved to provide maximum values of stress birefringence. The need to maximize function f is recognized in GB—A—2,012,983 as evidenced by equations (7) and (8) thereof.

Another art-recognized design criterion for single mode optical waveguide is concerned with minimizing loss. A common method of forming single mode optical waveguide preforms is illustrated in Figure 11 of GB—A—2,012,983 which shows a plurality of vapor deposited layers on the inner surface of a substrate tube. The purity of the substrate tube is generally not as high as that of the vapor deposited glass. Therefore, the vapor deposited core glass is isolated from the substrate tube by a layer of vapor deposited optical cladding glass of sufficient thickness. For a single mode fiber having a core cross-section which is circular or nearly circular, the radius $r_s$ of the optical cladding should be at least five times the radius $r_a$ of the core. This estimate is based on the findings reported in the publication: Electronics Letters Vol. 13, No. 15, pp. 443—445 (1977). For fibers having cores of oblong cross-section, this relationship lacks meaningful significance. In such a fiber, the extent of the optical cladding is better described in terms of its thickness. Since the size of a single mode core is related to the transmission wavelength $\lambda$, the thickness of the optical cladding can also be specified in terms of $\lambda$. The aforementioned cladding radius to core radius ratio implies that the thickness of the optical cladding be at least about $20\lambda$. When a single mode waveguide is designed in accordance with this criterion, loss associated with cladding thickness is limited to an acceptably low value.

The following analysis of GB—A—2,012,983 is made by taking into consideration, inter alia, the specific embodiment described in conjunction with Figures 10—12 thereof. The fiber of that embodiment will satisfy the requirement that the ratio $A_{sc}/A_f$ exceeds 0.9 except when the substrate tube is completely filled with internal layers during the process of making the preform from which the fiber is drawn. This aforementioned exception is, of course, an impossibility. Since the substrate tube cannot be completely filled during the internal layer deposition process, the total thickness of the internal layers is limited by the internal diameter of the substrate tube. It is well known that the core diameter of a step profile single mode fiber is generally between 3 μm and 10 μm. The outside diameter of the fibre is typically about 125 μm. If the preform described in GB—A—2,012,983 is formed in accordance with conventional practice so that the ratio $A_{sc}/A_f$ exceeds 0.9, the thickness of the optical cladding layer will be less than $20\lambda$ at conventional wavelengths. Thus, the excess fiber loss due to insufficient optical cladding thickness will not be sufficiently low for many applications.

It is therefore an object of the present invention to provide an improved single polarization single mode optical waveguide exhibiting stress-induced birefringence.

According to the invention there is provided a polarization retaining single mode optical waveguide fiber comprising a transparent core surrounded by a layer of transparent cladding material which is of a refractive index lower than the core the cladding material forming an outer cladding layer of stress cladding glass surrounding an inner cladding, said stress cladding glass having a thermal coefficient of expansion different from that of said inner cladding glass, the outer surface of said outer layer being substantially circular in cross section, the cladding layer including an asymmetry that induces a birefringence in the core, characterised in that the core has an oblong cross-sectional configuration, and the cladding layer includes an oblong inner cladding layer disposed on the surface of said core, said inner cladding layer including an optical cladding layer of high purity glass surrounded by a layer of lower purity glass.

The aforementioned optical fiber may be formed by providing a tubular intermediate product comprising an inner layer of core glass surrounded by a first cladding glass layer. The intermediate product is collapsed to form a flattened preform foreproduct wherein the core glass has been transformed into a unitary layer having an elongated cross-section. This core layer is surrounded by an inner cladding layer which now has an oblong cross-sectional configuration. A layer of particulate glass, often referred to as soot, is deposited on the outer surface of the inner cladding layer, the TCE of the particulate glass being different from that of the inner cladding glass. The resultant article is heated to consolidate the particulate glass into an outer cladding glass layer, thereby forming a solid glass draw blank which can be drawn into an optical waveguide fiber.

In accordance with one method of forming the tubular intermediate product, a plurality of layers are deposited by a chemical vapor deposition technique on the inner surface of a substrate tube which is formed of a glass which may be of lower purity than the glass layers deposited therein. The innermost layer forms the core and the next adjacent layer, which is thicker than the core layer, forms the optical cladding. This method of forming the fiber permits the thickness of the optical cladding to be greater than $20\lambda$ at the operating wavelength. The core is thus adequately isolated from the impure substrate tube.

In another embodiment, the tubular intermediate product is formed by a flame oxidation technique. Reactant vapors are fed to a burner where they are oxidized in a flame to form layers of glass particulate material which is deposited on a cylindrical mandrel. The first applied layer forms the core material of the resultant fiber. At least one additional layer is applied to the first layer to form the inner cladding. After the mandrel is removed, the resultant hollow porous preform can be consolidated to form a hollow glass tube which is thereafter heated on opposite sides to cause it to collapse flat. Alternatively, a low pressure can be applied to the aperture of the soot preform to cause it to collapse flat during consolidation.

Both of these methods permit the formation of a very thick stress cladding layer so that the ratio $A_{sc}/A_f$ is greater than 0.9.

In another aspect of the invention there is provided a polarization retaining single mode optical waveguide fiber comprising a transparent core surrounded by a layer of transparent cladding material having a refractive index lower than that of the core, the cladding layer including an asymmetry that induces a birefringence in the core, characterised in that said cladding includes a first pair of diametrically opposed, longitudinally-extending glass regions, the thermal coefficient of expansion of said glass regions being different than that of said cladding glass.

The fiber can further comprise a second pair of diametrically opposed regions which are orthogonally disposed with respect to the two diametrically opposed regions. The TCE of the two regions is greater than that of the cladding glass, and the TCE of the second pair of regions is less than that of the cladding glass.

The fiber of the last mentioned embodiment can be formed by the following method. A first coating of particulate glass is deposited on a rotating mandrel. A second coating of particulate glass having a refractive index lower than that of the first coating is deposited over the first coating. First and second longitudinally extending regions of particulate glass having a TCE different from that of the second coating are deposited on diametrically opposed portions of the second coating. This can be accomplished by halting rotation of the mandrel, moving the deposition means longitudinally along the mandrel, rotating the mandrel 180°, and again moving the deposition means along the mandrel. Alternatively, the longitudinally extending regions can be formed by changing the composition of reactant materials supplied to the deposition means during the rotation of the mandrel so that the desired particulate glasses are formed and deposited during each increment of mandrel rotation. A coating of particulate cladding glass is then deposited on the outer surface of the resultant body. The TCE of the cladding glass is similar to that of the second glass coating, and the refractive index of the cladding class is equal to or lower than that of the second glass coating. The mandrel is removed, and the resultant porous preform is formed into an optical waveguide fiber.

An alternative method of manufacturing the fiber of the present invention comprises the steps of disposing centrally within a glass tube a first glass rod having an axially disposed core region surrounded by a layer of cladding glass. A first pair of glass rods is diametrically situated with respect to the central rod within the tube, the first pair of rods being formed of a glass having a TCE different from that of the cladding glass. Rods of cladding glass are situated in at least some of the interstices between the centrally disposed rod, the first pair of rods and the tube. The resultant combination can be drawn into a fiber. An increase in birefringence can be obtained by disposing within the tube on opposite sides of the first rod and orthogonally disposed with respect to the first pair of glass rods a second pair of glass rods having physical characteristics different from those of the first pair of glass rods.

The fiber of the present invention can also be manufactured in accordance with a process which includes the steps of passing through a first tube a gas which, when heated, forms glass particles, and moving a heat source along the outside of the first tube whereby at least a portion of the gas is converted to particulate material and at least a portion of the particulate material is deposited on the inside of the first tube. A pair of tubes is moved within the first tube while maintaining the ends of the pair of tubes, which are within the first tube, in spaced relation to the heat source and upstream of the heat source, the pair of tubes being disposed symmetrically on opposite sides of the center of the first tube. The gas is passed between the first tube and the pair of tubes. Through the pair of tubes is passed another gas which reacts in the hot zone to form an oxide which combines with the particulate material to form a region of glass having a coefficient of expansion different from that of the glass particles produced by the first gas alone. The pair of tubes may be at least partially retracted from the first tube except when gas is flowed therethrough.

In the drawings:

Figure 1 is a cross-sectional view of an intermediate product which is employed in the formation of the preform from which the fiber of the present invention is formed.

Figure 2 shows an apparatus for collapsing the intermediate product of Figure 1.

Figures 3 and 4 are schematic representations of an apparatus for forming a composite preform having an outer soot coating.

Figure 5 is a cross-sectional view of a draw blank formed by consolidating the composite preform of Figure 4.

Figure 6 is a cross-sectional view of a single-mode single polarization fiber drawn from the draw blank illustrated in Figure 5.

Figure 7 illustrates a flame hydrolysis process for forming a preform including a core portion and an inner cladding portion.

Figure 8 shows the soot preform of Figure 7 after the mandrel has been removed.

Figure 9 shows the consolidated preform.

Figure 10 is a schematic representation of a consolidation furnace which may be used to consolidate the preform of Figure 8.

Figure 11 is a cross-sectional view of an optical waveguide fiber constructed in accordance with the present invention.

Figures 12 and 13 are cross-sectional views of further embodiments of the present invention.

Figure 14 is a cross-sectional view of a further embodiment of the invention.

Figure 15 illustrates one form of apparatus which can be employed in the formation of a fiber in accordance with the present invention.

Figure 16 is a cross-sectional view of a preform formed by the apparatus of Figure 15.

Figure 17 is a cross-sectional view of a fiber which can be formed from the preform shown in Figure 16.

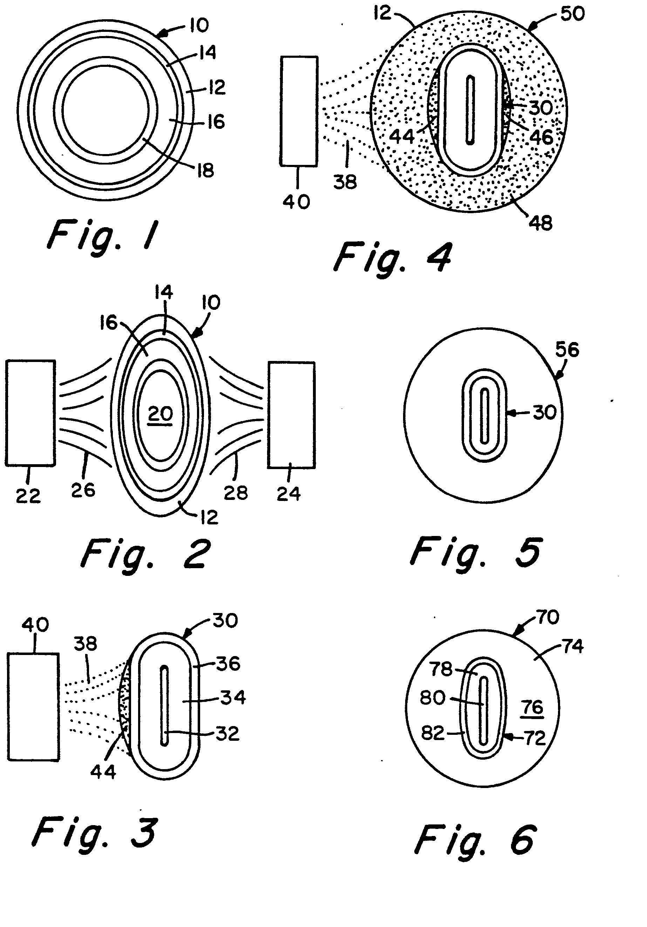

Figures 1 to 10 relate to an embodiment wherein a single mode fiber comprises an oblong core surrounded by an oblong inner cladding layer and an outer layer of stress cladding glass having a circular outer surface. Figure 1 shows an intermediate product 10 formed by a well-known embodiment of the chemical vapor deposition technique whereby one or more layers of glass are formed on the inside surface of a substrate tube which later forms at least a portion of the cladding material. The reactant vapor, together with an oxidizing medium, flows through hollow, cylindrical substrate tube 12. The substrate and the contained vapor mixture are heated by a source that move relative to the substrate in a longitudinal direction, whereby a moving hot zone is established within the substrate tube 12. A suspension of particulate material, which is produced within the hot zone, travels downstream where at least a portion thereof comes to rest on the inner surface of tube 12 where it is fused to form a continuous glassy deposit. Such process parameters as temperature, flow rates, reactants and the like are discussed in U.S. Patent No. 4,217,027 and in the publications: J. B. MacChesney et al., Proceedings of the IEEE, 1280 (1974) and W. G. French et al., Applied Optics, 15 (1976). Reference is also made to the text *Vapor Deposition* edited by C. F. Powell et al., John Wiley & Sons Inc. (1966).

A thin barrier layer 14 of pure silica or silica doped with an oxide such as $B_2O_3$ is sometimes initially deposited on the inner surface of tube 12 which is usually formed of silica or a high silica content glass, the purity of which is lower than that of the vapor-deposit layers formed therein. The barrier layer prevents the migration of hydroxyl ions or other light absorbing impurities from tube 12 into optical cladding layer 16. In order to reduce light transmission loss caused by the impurity of the substrate tube to an acceptably low level, the thickness of layer 16 is made sufficiently great that the thickness of the optical cladding layer in the resultant fiber is greater than 20λ. Since barrier layer 14 is optional, it is not shown in Figures 3—6. The optical cladding layer is a relatively thick layer of glass having a relatively low refractive index. It conventionally comprises pure silica or silica doped with a small amount of dopant oxide for the purpose of lowering processing temperatures. The addition of a small amount of $P_2O_5$ to the deposited silica cladding layer is taught in the publication: S. Sentsui et al., "Low Loss Monomode Fibers With $P_2O_5$—$SiO_2$ Cladding in the Wavelength Region 1.2—1.6 μm", 5th European Conference on Optical Communication, Amsterdam, September, 1979. The use of $P_2O_5$ along with either $B_2O_3$ or F in the deposited silica cladding layer is taught in the publication: V. J. Ainslie et al., "Preparation of Long Length of Ultra Low-Loss Single-Mode Fiber", Electronics Letters, July 5, 1979, Vol 15, No. 14, pp. 411—413. The use of such dopants has resulted in a deposition temperature of about 1500°C, which is approximately 200°C lower than the temperature required to deposited a pure fused silica cladding layer. Upon completion of optical cladding layer 16, a relatively thin layer 18 of core material is deposited on the inner surface thereof. Core layer 18 consists of a high purity glass having a refractive index greater than that of cladding layer 16. Layer 18 conventionally comprises silica doped with a low-loss oxide for the purpose of increasing the refractive index. Many dopants have been employed in the fabrication of the cores of single mode optical waveguide fibers, $GeO_2$ presently being preferred. Single mode waveguides having losses less than 1 dB/km in the infra red region comprise cores formed of $SiO_2$ doped with $GeO_2$ as reported in the aforementioned Sentsui et al and Ainslie et al publications. The resultant intermediate product 10 contains an aperture 20.

For operation at wavelengths in the range between 1.1 and 1.8 μm a preferred intermediate product could be constructed in accordance with the teachings of the European Patent Application published as 0041864A2. That application teaches the formation of a $P_2O_5$ doped $SiO_2$ cladding layer on the inner surface of a borosilicate substrate tube followed by a thin layer of pure $SiO_2$ to prevent the $P_2O_5$ from diffusing into the $GeO_2$ doped $SiO_2$ core which is deposited on the inner surface of the pure $SiO_2$ layer.

For purposes of the present invention it is merely required that intermediate product 10 comprise an inner layer of core glass surrounded by a layer of lower refractive index optical cladding glass. Core 18 could be deposited directly on the inner surface of tube 12, for example, if tube 12 were formed of high purity glass. As used herein, the term "inner cladding layer" means tube 12 and any other layer or layers of glass surrounding core layer 18 in intermediate product 10.

It is an advantage of the present method that commercially available glass tubes may be employed for substrate tube 12. The cross-sectional area of cladding layer 16 can be made much greater, e.g. more than twice that of substrate tube 12, so that the physical characteristics of deposited layer 16, rather than those of tube 12, predominate in the determination of characteristics such as the thermal coefficient of expansion of the inner cladding. In such a situation, the cross-sectional area of the substrate tube is so small relative to that of the entire resultant fiber that the physical characteristics thereof remain essentially insignificant.

Intermediate product 10 can be collapsed in the manner illustrated in Figure 2. Burners 22 and 24 produce flames 26 and 28, respectively which are directed onto opposite sides of intermediate product 10. During this process intermediate product 10 may be mounted in the glass lathe (not shown) in which it was mounted during the formation of layers 14 and 16. During the collapse process illustrated in Figure 2, lathe rotation is halted so that only opposite sides of product 10 are heated. The collapsing is preferably done under a controlled internal pressure as described in U.S. Patent No. 4,154,491. During this step, the heat source must cover a sufficiently broad axial region of intermediate product 10 to permit collapse thereof. Alternatively, a single heat source may be employed in the manner described in U.S. Patent No. 4,184,859, whereby first one side and then the other is collapsed.

Complete collapse of the intermediate product 10 results in preform foreproduct 30 (see Figure 3) in which opposite sides of core layer 16 have been combined to form a core portion 32 which is elongate in cross-section. Very large core aspect ratios can thus be achieved. The core is surrounded by inner cladding portion 34 and substrate portion 36, both of which have an oblong geometry.

Preform foreproduct 30 is then provided with a cladding portion, the outer surface of which is substantially circular in cross-section. The surface of foreproduct 30 is prepared in a conventional manner prior to deposition of the outer cladding. The surface of preform foreproduct 30 is kept clean after the firepolishing step which resulted in the collapse of intermediate product 10 by inserting foreproduct 30 into a clean sealed bag such as a polyethylene bag. If foreproduct 30 is handled or permitted to become dirty, several cleaning steps are typically required. It is washed in deionized water and then washed in an isopropyl alcohol bath. It is then etched in HF to remove a few microns of glass or about 1% of the article weight. Then foreproduct 30 is rinsed in deionized water, degreased with isopropyl alcohol and placed in a clean polyethylene bag. Soot of the desired glass composition is deposited on foreproduct 30 by a conventional flame hydrolysis process similar to that disclosed in U.S. Patents Nos. 3,737,292 and 4,165,223. Referring to Figures 3 and 4, there is shown an apparatus which is now conventionally employed in the manufacture of low-loss optical waveguide fibers. A flame 38 containing glass soot emanates from a flame hydrolysis burner 40 to which fuel, reactant gas and oxygen or air are supplied. Burners such as those disclosed in U.S. Patents Nos. 3,565,345; 3,565,346; 3,609,829 and 3,698,936 may be employed. Liquid constituents required to form the glass soot can be delivered to the burner by any one of the many well known reactant delivery systems known in the prior art. Reference is made in this regard to U.S. Patents Nos. 3,826,560; 4,148,621 and 4,173,305. Excess oxygen is supplied to the burner so that the reactant vapors are oxidized within flame 38 to form the glass soot which is directed toward foreproduct 30.

In accordance with one technique for forming the outer cladding layer, longitudinal strips 44 and 46 are initially deposited on the flattened sidewalls of foreproduct 30 to accelerate the formation of a circular outer cladding. With the lathe halted, burner 40 makes a sufficient number of longitudinal passes to form a soot layer 44. Foreproduct 30 is rotated 180° and a second soot layer 46 is deposited opposite the first one as shown in Figure 4. Outer layer 48 of cladding soot is then deposited by rotating foreproduct 30 while burner 40 traverses it longitudinally.

The steps of depositing strips 44 and 46 of cladding glass may be omitted without affecting to too great an extent the geometry of the resultant fiber. If cladding layer 48 is deposited directly upon foreproduct 30, the soot stream from the burner will deposit a greater amount of soot when the flat side walls of foreproduct 30 are facing the burner than when the rounded portions thereof are facing the burner, since soot collection efficiency is a function of target size. This tends to decrease the noncircularity of the soot blank cross-section as layer 48 is built up. Substantial circularity should be achieved when the outside diameter of layer 48 is sufficient, relative to the size of the core, to enable the resultant fiber to function as a single-mode fiber. The thickness of layer 48 must be sufficient to cause the ratio $A_{sc}/A_f$ in the resultant fiber to exceed 0.9.

The flame hydrolysis-produced cladding layer is porous in form and must be heated to fuse or consolidate it into a glass layer free from particle boundaries. Consolidation is preferably accomplished by gradually inserting the composite body 50 into a consolidation furnace in the manner taught in U.S. Patent No. 3,933,454. The resultant glass draw blank 56 may not be circular if layers 44 and 46 are not applied or if they are applied in such a fashion that they do not balance the initial non-circularity of preform foreproduct 30. The amount that the outer surface of consolidated blank 56 deviates from circularity decreases with increasing amounts of outer cladding 48.

Draw blank 56 of Figure 5 is inserted into a draw furnace wherein at least one end thereof is heated to a temperature that is sufficiently high to permit fiber 70 of Figure 6 to be drawn therefrom in accordance with conventional practice. During the drawing of fiber 70, surface tension tends to round the outer surface thereof.

Alternative processes for forming an intermediate product are illustrated in Figures 7 to 10. As shown in Figure 7, a first coating 84 of glass soot is applied to cylindrical mandrel 85 by a conventional flame hydrolysis process such as that referred to hereinabove. A flame 86 containing glass soot emanates from flame hydrolysis burner 87 and impinges upon mandrel 85. After a coating 84 of core glass is formed on mandrel 85, the composition of the reactant gas fed to burner 87 is changed and a second coating 88 of inner cladding glass is applied to the outer surface of first coating 84. The refractive index of coating 84 is greater than that of coating 88. The physical characteristics of coating 88, such as the TCE thereof, are selected to impart the required amount of stress to the inner cladding of the resultant optical waveguide fiber.

After coating 88 has achieved the desired thickness, the mandrel is removed as shown in Figure 8 to form a porous preform 90 having an aperture 89. The resultant hollow soot preform can then be consolidated in the manner described hereinabove to form hollow intermediate product 10' as shown in Figure 9. Intermediate product 10' can be collapsed in the manner illustrated in Figure 2 and further processed in the manner described in conjunction with Figures 3 to 6 to form a polarization retaining single-mode optical waveguide fiber.

The porous preform 90 illustrated in Figure 8 can alternatively be consolidated in the manner illustrated in Figure 10 to form a preform foreproduct having a high aspect ratio core in a single processing step. After mandrel 85 has been removed from the soot preform, a tube 91 is inserted into one end of the preform. The preform is then suspended from a tubular support 92 by two platinum wires, of which only wire 93 is shown. The end of gas conducting tube 91 protrudes from tubular support 92 and into the adjacent end of preform 90. The preform is consolidated by gradually inserting it into consolidation furnace 94 in the direction of arrow 97. The preform should be subjected to gradient consolidation, whereby the bottom tip thereof begins to consolidate first, the consolidation continuing up the preform until it reaches that end thereof adjacent to tubular support 92. During the consolidation process a flushing gas such as helium, oxygen, argon, neon, or the like, or mixtures thereof flow through the consolidation furnace as indicated by arrows 95. Prior to the time that preform 90 begins to consolidate, drying gases may be flowed into aperture 89 in the manner taught in U.S. Patent No. 4,125,388. During the time that the initial tip of the preform begins to consolidate, the pressure in aperture 89 is reduced relative to that outside the preform. This may be accomplished by connecting a vacuum system to gas conducting tube 91 by line 96. As preform 90 is inserted into the consolidation furnace in the direction of arrow 97 the low pressure within aperture 89 causes aperture 89 to collapse flat, beginning in the region of the initially consolidated tip portion of the preform. As the remainder of the preform becomes consolidated, the remainder of the aperture continues to collapse flat. Thus, in a single consolidation step, porous soot preform 90 having aperture 89 therein can be consolidated and simultaneously have the aperture collapsed flat to form a preform foreproduct of the type indicated by numeral 30 in Figure 3.

Referring again to Figures 4 to 6, the composition of soot layer 48 (and that of strips 44 and 46, if they are deposited) is such that the TCE of the resultant cladding layer 74 is much greater than or much less than the TCE of the remainder of fiber 70. It is known that portion 72 (comprising core 80, substrate tube 82 and any layers forming inner cladding 78) will be caused to be in tension if the TCE of the outer or "stress cladding" layer 74 is lower than the effective TCE of portion 72. Conversely, portion 72 will be caused to be in compression if the effective TCE thereof is lower than that of stress cladding layer 74. (See the publication: S. T. Gulati and H. E. Hagy, American Ceramic Society *61* 260 (1978)). Moreover, a stress distribution will exist within the waveguide core 80 in which $\sigma_x > \sigma_y$, where $\sigma_x$ and $\sigma_y$ are the stresses in the core region parallel to and perpendicular to the long axis of the core cross-section. Furthermore, this stress difference will increase as the aspect ratio of the core region increases. This stress differential will produce the desired birefringence.

A stress of 20—40 kpsi in the core is needed to provide the require birefringence. With the aspect ratios achievable by the processes described hereinabove, the TCE difference between the inner cladding and the outer stress cladding should be greater than $1 \times 10^{-7}/°C$. Following are two theoretical examples wherein the glass compositions of the various parts of the fibers are chosen so that the fiber core is in compression and tension, respectively.

A fiber of the type shown in Figure 6 is formed of the glass compositions given in Table 1. The TCE of each composition is also listed.

TABLE 1
Composition (wt.%)

|  | $GeO_2$ | $SiO_2$ | TCE $(\times 10^{-7}/°C)$ |
|---|---|---|---|
| Core 80 | 15 | 85 | 13 |
| Inner clad 78 |  | 100 | 5 |
| Tube 82 |  | 100 | 5 |
| Outer clad 78 | 30 | 70 | 23 |

The fiber defined by Table 1 has a core that is in compression and an outer cladding which is in tension. Although the core is adequately stressed, this fiber may be undesirable from a strength standpoint. Such a fiber could be strengthened by adding to the outer surface thereof a further low expansion cladding layer of $SiO_2$, for example.

A fiber of the type illustrated in Figure 6 could be formed of the materials specified in Table 2 in order to put the core into a state of tension.

TABLE 2
Composition (wt.%)

| | GeO$_2$ | P$_2$O$_5$ | SiO$_2$ | TiO$_2$ | TCE ($\times 10^{-7}$/°C) |
|---|---|---|---|---|---|
| Core 80 | 15 | 1.5 | 83.5 | | 15 |
| Inner clad 78 | | 1.5 | 98.5 | | 6 |
| Outer clad 74 | | | 93 | 7 | 0 |

This type of fiber, in which the core is in tension, is preferred since the outer cladding will be in compression, a condition tending to strengthen the fiber.

Figures 11 to 17 are concerned with a further aspect of the invention wherein the fiber core is subjected to a stress-induced birefringence by introducing into the cladding on opposite sides of the core longitudinally extending regions of glass having a TCE different from that of the remainder of the cladding. Figure 11 shows a cross-sectional view of a single polarization optical waveguide fiber comprising a core 110 surrounded by an inner cladding region 111. Diametrically opposed relative to core 110 are two narrow, longitudinally-extending regions 112 formed of a material having a TCE different from that of material 111. While regions 112 are illustrated as being of somewhat random cross-section in Figure 11, methods will be described below which result in the formation of these regions in various specific shapes. When such a fiber is drawn, the longitudinally-extending regions 112 and the cladding regions disposed orthogonally thereto will shrink different amounts whereby regions 112 will be put into a state of tension or compression depending upon the TCE thereof relative to that of the cladding. A strain induced birefringence, which is thus induced in the fiber, reduces coupling between the two orthogonally polarized fundamental modes. Surrounding regions 112 is an outer cladding region 113, the refractive index of which is preferably equal to or less than that of inner cladding region 111. Region 113 may consist, for example, of any of the materials specified above for use as cladding region 111.

The outer surface of cladding region 113 may be circular as illustrated in Figure 11, or it may have areas which are flattened in the manner disclosed in the aforementioned U.K. Patent Application GB—A—2,012,983 for the purpose of aligning a fiber with a polarized light source or with another fiber to which it is to be connected. If the outer surface of cladding 113 is substantially circular, means such as longitudinal depression 114 may be provided for alignment purposes. If it is preferred that the outer surface of the fiber be substantially circular, the input end of the fiber can be properly oriented during its installation into a system. The input end is connected to a polarized light source, and an analyzer is connected to the output end of the fiber. The input end of the fiber is rotated relative to the source until a maximum or a minimum is detected in the light emanating from the output end. When either the maximum or minimum light output is detected, the input end of the fiber is then fixedly mounted with respect to the polarized light source.

Regions 112 should be as close as possible to core 110 without inordinately affecting the light transmitting properties of the fiber. If regions 112 are formed of low loss material having the same refractive index as inner cladding region 111, then the minimum radius $r_m$ of regions 112 is about 1.5 $r_a$, where $r_a$ is the radius of core 110. A matching of the refractive index of regions 112 to that of the cladding could be accomplished by employing a cladding formed of SiO$_2$ and forming the stress-inducing regions 112 of, for example, SiO$_2$ doped with one of the following combinations of dopant oxides: GeO$_2$ and B$_2$O$_3$ or P$_2$O$_5$ and B$_2$O$_3$ or GeO$_2$, P$_2$O$_5$ and B$_2$O$_3$. An example of a suitable high TCE composition having a refractive index substantially the same as pure SiO$_2$ is SiO$_2$ doped with 12 wt.% B$_2$O$_3$ and 4 wt.% P$_2$O$_5$. To ensure that the resultant fiber possesses low loss characteristics, at least the entire central region, i.e. the core and inner cladding region, should be formed by a chemical vapor deposition (CVD) process. If the refractive indices of these two regions are not matched and $r_m$ is too small, i.e. less than about 1.5 $r_a$, regions 112 can cause light transmission loss due to scattering.

If regions 112 adversely affect the light transmission properties of the fiber, e.g. the regions 112 are formed of a material which inordinately absorbs light at the transmission wavelengths, the inner radius $r_m$ of these regions should be at least three times and preferably a minimum of five times the radius of the core. This estimate is based on the findings reported in the publication: *Electronics Letters*, Vol. 13, No. 15, pp 443—445 (1977). Obviously, the adverse effect of light absorbing material increases as the distance from the material to the core decreases. However, the magnitude of the birefringence at the core also decreases as the inner radius $r_m$ of the stress-inducing longitudinally extending regions decreases. The optimum inner radius of regions 112 depends upon the specific type of single mode waveguide employed, since the amount of light propagating beyond the core region of a single mode waveguide depends upon such parameters as core radius and refractive index.

A fiber may contain a second set of

9

diametrically opposed longitudinally-extending regions having physical characteristics which are different from those of the first set of stress-inducing regions. The fiber illustrated in Figure 12 comprises core 116, inner cladding region 117, and outer cladding region 118. Two longitudinally-extending regions 119, which have a TCE different from that of the cladding regions, are diametrically opposed relative to core 116. Orthogonally disposed with respect to regions 119 is a second pair of longitudinally extending regions 120 which may comprise a light absorbing glass or a glass having a TCE which deviates from that of region 117 in a direction different from the direction in which the TCE of region 119 deviates from that of region 117. For example, the TCE of regions 120 should be less than the TCE of region 117 if the TCE of regions 119 is greater than the TCE of region 117.

If the cladding regions consisted of pure $SiO_2$, regions 119 could comprise $SiO_2$ doped with $B_2O_3$ and $P_2O_5$ while regions 120 could comprise $SiO_2$ doped with $TiO_2$. Regions 119 will be in a state of tension while regions 120 will be in a state of compression. The effect of the two tensive regions is additive with that of the two compressive regions, the resultant combination providing a greater magnitude of stress-induced birefringence than that which would be obtainable with either regions 119 or regions 120 alone.

The $TiO_2$ doped regions are lossy for two reasons. The $TiO_2$—$SiO_2$ glass tends to phase separate and form small inhomogeneous scattering sites which increase scattering loss. Also, the $TiO_2$ raises the refractive index of the region to a value greater than that of region 117 so that light from core 116 that reaches regions 120 will tend to refract into and through regions 120 and thus away from core 116. Stress regions can be made lossy by forming them from glass rods which have been melted in crucibles containing absorption impurities such as iron, nickel, cobalt, copper and the like.

The aforementioned U.K. Patent Application GB—A—2,012,983 states that the methods disclosed therein are capable of fabricating fibres with a strain birefringence $\Delta n$ as large as $40 \times 10^{-5}$ and that the beat length L for such as value of $\Delta n$ is 2.5 mm at 1 μm wavelength and 1.25 at 0.5 μm. Some applications, however, require even shorter beat lengths, thereby necessitating values of $\Delta n$ around $10^{-3}$. The following theoretical example indicates that such values of $\Delta n$ are easily achieved by the fiber construction of the present invention. Referring to Figure 13, there is illustrated a fiber having a core 122, cladding 123 and two longitudinal regions 124 of circular cross-section. The diameter of core 122 is 5 μm, that of stress-producing regions 124 is 25 μm, and that of cladding 123 is 125 μm. The centers of circular regions 124 are located at a radius of 25 μm. The specific composition of core 122 is immaterial, it merely being necessary that the refractive index thereof be greater than that of cladding 123 which consists of pure $SiO_2$. The composition of regions 124 is 5 wt.% $P_2O_5$, 12 wt.% $B_2O_3$ and 83 wt.% $SiO_2$. Birefringence calculations were based on the publication: G. W. Scherer, "Stress-Induced Index Profile Distortion in Optical Waveguides" *Applied Optics*, Vol 19, No. 12, June 1980, pp 2000—2006. Using computer techniques, the birefringence in the region of the core and inner cladding due to one of the regions 124 was determined. Then the birefringence in the central region due to the other of regions 124 was determined and added to the first calculated value. The results are plotted in Figure 13. Lines 125, 126, 127 and 128 are lines of equal birefringence of $0.4 \times 10^{-3}$, $0.5 \times 10^{-3}$, $0.6 \times 10^{-3}$ and $0.7 \times 10^{-3}$, respectively, the latter line passing through core 122.

One method for forming the fiber of the present invention employs a flame hydrolysis process similar to that disclosed in U.S. Patents Nos. 3,737,292 and 4,165,223. The resultant fiber is shown in cross-section in Figure 14 wherein elements similar to those in Figure 11 are represented by primed reference numerals. The fiber of Figure 14 differs from that of Figure 11 in that longitudinally extending stress-inducing regions 112' are crescent-shaped. The method concerned is described in copending European application EP—A—145030 (divided from this application) to which attention is directed.

Fibers of the type illustrated in Figures 11 to 13 may also be produced from a rod-in-tube type preform which is disclosed in copending European application EP—A—145031 (which is divided from this application) to which attention is directed.

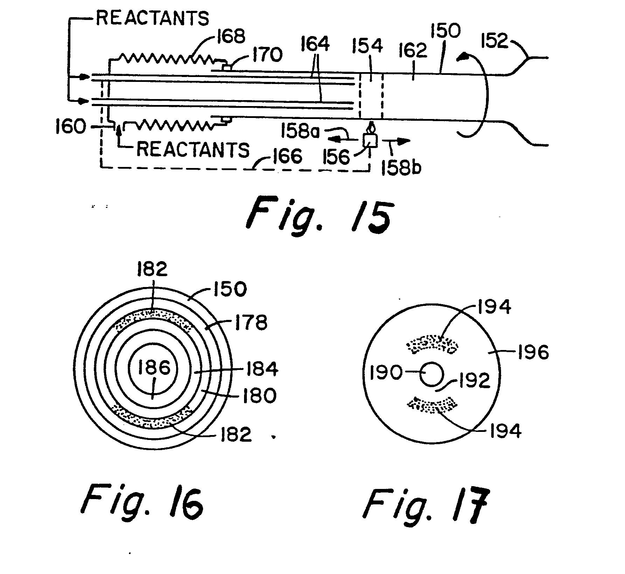

Figure 15 is a schematic representation of an otherwise standard chemical vapor deposition apparatus modified so as to be applicable to the practice of this invention. This system comprises substrate or bait tube 150 which may have an enlarged exhaust tube 152 fixed to the downstream end thereof. Tubes 150 and 152 are chucked in a conventional glass turning lathe (not shown), and the combination may be rotated as indicated by the arrow. A hot zone 154 is caused to traverse tube 150 by moving heating means 156 as schematically depicted by arrows 158a and 158b. Heating means 156 can consist of any suitable source of heat such as a plurality of burners encircling tube 150. In one embodiment thereof, the heating means must be capable of applying heat locally. For example, a single burner or two diametrically opposed burners could be employed. Reactancts are introduced into tube 150 via tube 160, which is connected to a plurality of sources of gases and vapors. Any of the aforementioned reactant delivery systems could be employed.

Burner 156 initially moves at a low rate of speed relative to tube 150 in the direction of arrow 158b, the same direction as the reactant flow. The reactants react in hot zone 154 to produce soot which is carried downstream by moving gas where at least a portion of the soot deposits on the inner surface of tube 150 in region 162. As burner 156 continues to move in the direction of arrow 158b, hot zone 154 moves downstream so that a part of the soot buildup extends into the hot zone and is consolidated thereby to form a unitary, homogeneous glassy layer on the inner surface of tube 150.

When burner 156 reaches the end of tube 150 adjacent to exhaust tube 152, the temperature of the flame is reduced and the burner returns in the direction of arrow 158a to the input end of tube 150. Thereafter, additional layers of glassy material are deposited within tube 150 in the manner described above.

After suitable layers have been deposited to serve as the core material and any other desired layers of the resultant optical waveguide, the temperature of the glass is increased to cause tube 150 to collapse. This can be accomplished by reducing the rate of traverse of the hot zone. Preferably, the interior of tube 150 is pressurized during collapse as described in U.S. Patent No. 4,154,591.

The conventional apparatus heretofore described is suitable for the deposition of glass layers of uniform composition on the inner surface of tube 150. In accordance with an aspect of the present invention, the conventional apparatus is modified by the provision of means adjacent to and upstream of the hot zone 154 for delivering to diametrically opposed regions of the hot zone reactant gases capable of forming soot having an expansion coefficient different from that of the cladding glass material. As shown in Figure 15, a portion of two gas conducting tubes 164 extend into that end of bait tube 150 into which the reactants are introduced. Those portions of tubes 164 within tube 150 terminate just prior to hot zone 154. Tubes 164 are mechanically coupled by means represented by dashed line 166 to burner 156 to ensure that tubes 164 are maintained the proper distance upstream of the hot zone 154. Alternatively, the heat source and tubes 164 may be kept stationary, and tube 150 may be caused to move longitudinally. The input end of tube 150 is connected to tubes 164 by a collapsible member 168, a rotating seal 170 being disposed between member 168 and tube 150. While not in use, tubes 164 can be completely withdrawn from tube 150, or they can be partially retracted to such an extent that they do not disturb the flow of reactants from conduit 160 through tube 150. Referring to Figure 16, a layer 178 of cladding glass can be deposited on the inner surface of tube 150 in a conventional manner. In order to form diametrically opposed longitudinal expansion strips within the cladding, a second reactant material is flowed through tubes 164 while the cladding reactant material continues to flow into conduit 160. For example, $SiCl_4$ and $BCl_3$ can be flowed into conduit 160 in order to deposit within tube 150 a layer 178 of cladding glass. After layer 178 has become sufficiently thick, tubes 164 are positioned adjacent to the hot zone and a reactant material such as $GeCl_4$ is flowed therethrough while the $SiCl_4$ and $BCl_3$ continues to flow into conduit 160. Oxygen to be employed in the reaction is also flowed into the hot zone in a manner known in the art. A layer 180 of borosilicate glass is deposited on the inner surface of layer 178, the stippled portions 182 of layer 180 containing $GeO_2$. Thereafter, an additional layer 184 of borosilicate cladding material can be deposited on layer 180, and a layer 186 of core material, e.g. $GeO_2$ doped $SiO_2$, can be deposited on layer 184. The resultant preform is then collapsed and drawn into a fiber in the manner described hereinabove. Regions 182 of layer 180 contain a sufficient amount of dopant material, e.g. $GeO_2$, to form within the resultant fiber longitudinal strips of high expansion glass.

After forming the preform of Figure 16, it is collapsed to form a solid draw blank which is inserted in a draw furnace where it is heated to a temperature sufficiently high to permit a fiber to be drawn therefrom. The resultant fiber, which is illustrated in cross-section in Figure 17, comprises a core 190, an inner cladding region 192 and an outer cladding region 196. On opposite sides of core 190 and within region 196 are two longitudinally-extending regions 194 of high expansion glass. There is a gradual change between regions 194 and the surrounding glass because of the mixture of gases during deposition of the glass and because of the diffusion of dopants during various high temperature steps to which the glass is subjected.

The cross-sectional configuration of fiber shown in figure 17 will also result from consolidating and drawing a soot preform of the type shown in Figure 7 of EP—A—145030.

**Claims**

1. A polarization retaining single mode optical waveguide fiber comprising a transparent core (110, 116, 122, 190) surrounded by a layer of transparent cladding material (113, 117, 118, 123, 196) having a refractive index lower than that of the core, the cladding layer including an asymmetry that induces a birefringence in the core, characterised in that said cladding includes a first pair of diametrically opposed, longitudinally-extending glass regions (112, 119, 124, 194) the thermal coefficient of expansion of said glass regions being different than that of said cladding glass (Fig. 11, 12, 13, 14, 17).

2. A fiber in accordance with claim 1, wherein the thermal coefficient of expansion of said first pair of diametrically opposed regions (112, 119, 124, 194) is greater than that of said cladding glass (113, 117, 118, 123, 196).

3. A fiber in accordance with claim 1, wherein the thermal coefficient of expansion of said first pair of diametrically opposed regions (112, 119, 124, 194) is lower than that of said cladding glass (113, 117, 118, 123, 196).

4. A fiber in accordance with claim 2, wherein said fiber further comprises a second pair of longitudinally extending regions (120) which is orthogonally disposed with respect to said two diametrically opposed regions (119), said second pair of regions (120) having physical characteristics different from those of said first pair of regions (Fig. 12).

5. A fiber in accordance with claim 4, wherein the thermal coefficient of expansion of said second pair of regions (120) is less than that of the cladding glass (117, 118).

6. A polarization retaining single mode optical waveguide fiber (70) comprising a transparent core (80) surrounded by a layer of transparent cladding material (74, 78, 82) which is of a refractive index lower than the core (80) the cladding material forming an outer cladding layer (74) of stress cladding glass surrounding an inner cladding, said stress cladding glass having a thermal coefficient of expansion different from that of said inner cladding glass, the outer surface of said outer layer (74) being substantially circular in cross-section, the cladding layer including an asymmetry that induces a birefringence in the core, characterised in that the core (80) has an oblong cross-sectional configuration, and the cladding layer (74, 78, 82) includes an oblong inner cladding layer (78, 82) disposed on the surface of said core (80), said inner cladding layer including an optical cladding layer (78) of high purity glass surrounded by a layer (82) of lower purity glass (Fig. 6).

7. A fiber in accordance with claim 6, wherein the ratio of the cross-sectional area of the outer cladding layer (74) to that of the entire fiber is greater than 0.9.

8. A fiber in accordance with claim 6 or 7, wherein the thickness of the optical cladding layer (78) is greater than twenty times the wavelength at which the fiber is to be operated.

9. A fiber in accordance with any one of claims 6 to 8, wherein the difference between the coefficients of expansion of said stress cladding glass and said inner cladding glass is greater than $1 \times 10^{-7}/°C$.

10. A fiber in accordance with claim 9, wherein the thermal coefficient of expansion of said inner cladding glass is greater than that of said stress cladding glass.

## Patentansprüche

1. Optische, polarisationserhaltende Einzelmoden - Wellenleiter - Faser mit einem transparenten Kern (110, 116, 122, 190), der von einer Schicht aus transparentem Mantelmaterial (133, 177, 118, 123, 196) umgeben ist, dessen Brechungsindex niedriger ist als der des Kerns, bei der die Mantelschicht eine Asymmetrie enthält, welche eine Doppelbrechung im Kern hervorruft, dadurch gekennzeichnet, daß der Mantel ein erstes Paar von diametral einander gegenüberliegenden, sich in Längsrichtung erstreckenden Glasbereichen (112, 119, 124, 194) aufweist und daß der Wärmeausdehnungskoeffizient der Glasbereiche unterschiedlich ist gegenüber dem des Mantelglases (Fig. 11, 13, 14, 17).

2. Faser nach Anspruch 1, bei der der Wärmeausdehnungskoeffizient des ersten Paares von diametral einander gegenüberlienden Bereichen (112, 119, 124, 194) größer ist als der des Mantelglases (113, 117, 118, 123, 196).

3. Faser nach Anspruch 1, bei welcher der Wärmeausdehnungskoeffizient des ersten Paares von diametral einander gegenüberliegenden Bereichen (112, 119, 124, 194) niedriger ist als der des Mantelglases (113, 117, 118, 123, 196).

4. Faser nach Anspruch 2, bei der die Faser weiterhin ein zweites Paar von in Längsrichtung sich erstreckenden Bereichen (120) enthält, das unter rechtem Winkel gegenüber den beiden diametral einander gegenüberliegenden Bereichen (119) angeordnet ist und bei dem das zweite Paar von Bereichen (120) physikalische Eigenschaften besitzt, die von dem des ersten Paares von Bereichen (Fig. 12) unterschiedlich sind.

5. Faser nach Anspruch 4, bei der der Wärmeausdehnungskoeffizient des zweiten Paares von Bereichen (120) geringer ist als der des Mantelglases (117, 188).

6. Optische, polarisationserhaltende Einzelmoden - Wellenleiter - Faser (70) mit einem transparenten Kern (80), der von einer Schicht aus transparentem Mantelmaterial (74, 78, 82) umgeben ist, dessen Brechungsindex niedriger ist als der des Kernes (80), bei der das Mantelmaterial eine äußere Mantelschicht (74) aus einem eine Spannung hervorrufenden Mantelglas bildet, welches einen inneren Mantel umgibt, bei der das die Spannung hervorrufenden Mantelglas einen Wärmeausdehnungskoeffizienten hat, der unterschiedlich ist von dem des inneren Mantelglases, bei der die Oberfläche der Außenschicht (74) im wesentlichen kreisförmigen Querschnitt hat und die Mantelschicht eine Asymmetrie enthält, welche in dem Kern eine Doppelbrechung einführt, dadurch gekennzeichnet, daß der Kern (80) eine längliche Querschnittskonfiguration aufweist und die Mantelschicht (74, 78, 82) eine längliche innere Mantelschicht (78, 82) enthält, die auf der Oberfläche des Kernes (80) angeordnet ist, daß der innere Mantel eine optische Mantelschicht (78) aus Glas hoher Reinheit enthält, die von einer Schicht (82) aus Glas (Fig. 6) niedriger Reinheit umgeben ist.

7. Faser nach Anspruch 6, bei welcher das Verhältnis der Querschnittsfläche der äußeren Mantelschicht (74) gegenüber der der gesamten Faser größer ist als 0,9.

8. Faser nach Anspruch 6 oder 7, bei welcher die Dicke der optischen Mantelschicht (78) um das 20-fache größer ist als die Wellenlänge, bei welcher die Faser betrieben wird.

9. Faser nach einem der Ansprüche 6, bis 8, bei welcher die Differenz zwischen dem Wärmeausdehnungskoeffizienten des die Spannung hervorrufenden Mantelglases und dem inneren Mantelglas größer ist als $1 \cdot 10^{-7}/°$ Celsius.

10. Faser nach Anspruch 9, bei welcher der Wärmeausdehnungskoeffizient des inneren Mantelglases größer ist als der des die Spannung liefernden Mantelglases.

## Revendications

1. Fibre de guide d'ondes optique unimode conservant la polarisation, comprenant une âme transparente (110, 116, 122, 190) entourée par une couche de matériau de gainage transparent (113, 117, 118, 123, 196) qui présente un indice de réfraction inférieur à celui de l'âme, la couche de gainage présentant une asymétrie qui confère de la biréfringence à l'âme, caractérisée en ce que ledit gainage comporte une première paire de régions de verre diamétralement opposées et s'étendant longitudinalement (112, 119, 124, 194), le coefficient de dilatation thermique desdites régions de verre étant différent de celui dudit verre de gainage (Fig. 11, 12, 13, 14, 17).

2. Fibre selon la revendication 1, caractérisée en ce que le coefficient de dilatation thermique de ladite première paire de régions diamétralement opposées (112, 119, 124, 194) est supérieur à celui dudit verre de gainage (113, 117, 118, 123, 196).

3. Fibre selon la revendication 1, caractérisée en ce que le coefficient de dilatation thermique de ladite première paire de régions diamétralement opposées (112, 119, 124, 194) est inférieur à celui dudit verre de gainage (113, 117, 118, 123, 196).

4. Fibre selon la revendication 2, caractérisée en ce que ladite fibre comprend en outre une deuxième paire de régions s'étendant longitudinalement (120) qui est diposée orthogonalement par rapport auxdites deux régions diamétralement opposées (119), ladite deuxième paire de régions (120) ayant des caractéristiques physiques qui diffèrent de celles de ladite première paire de régions (Fig. 12).

5. Fibre selon la revendication 4, caractérisée en ce que le coefficient de dilatation thermique de ladite deuxième paire de régions (120) est inférieur à celui du verre de gainage (117, 118).

6. Fibre de guide d'ondes optique unimode conservant la polarisation (70), comprenant une âme transparente (80) entourée par une couche de matériau de gainage transparent (74, 78, 82) qui est d'indice de réfraction inférieur à celui de l'âme (80), le matériau de gainage formant une couche de gainage externe (74) en verre de gainage de contrainte entourant un gainage interne, ledit verre de gainage de contrainte présentant un coefficient de dilatation thermique qui diffère de celui dudit verre de gainage interne, la surface externe de ladite couche externe (74) étant de section sensiblement circulaire, la couche de gainage présentant une asymétrie qui confère de la biréfingence à l'âme, caractérisée en ce que l'âme (80) présente une configuration de section oblongue et en ce que la couche de gainage (74, 78, 82) comporte une couche de gainage interne oblongue (78, 82) disposée sur la surface de ladite âme (80), ladite couche de gainage interne comportant une couche de gainage optique (78) en verre de haute pureté entourée par une couche (82) en verre de moindre pureté (Fig. 6).

7. Fibre selon la revendication 6, caractérisée en ce que le rapport de l'aire de la section droite de la couche de gainage externe (74) à celle de la fibre globale est supérieur à 0,9.

8. Fibre selon l'une des revendications 6 et 7, caractérisée en ce que l'épaisseur de la couche de gainage optique (78) est supérieure à vingt fois la longuer d'onde à laquelle la fibre est destinée à être exploitée.

9. Fibre selon l'une quelconque des revendications 6 à 8, caractérisée en ce que la différence entre les coefficients de dilatation dudit verre de gainage de contrainte et dudit verre de gainage interne est supérieure à $1\times10^{-7}$/°C.

10. Fibre selon la revendication 9, caractérisée en ce que le coefficient de dilatation thermique dudit verre de gainage interne est supérieur à celui dudit verre de gainage de contrainte.

0 061 901

Fig. 1

Fig. 4

Fig. 2

Fig. 5

Fig. 3

Fig. 6

Fig. 7

Fig. 8

Fig. 9

Fig. 10

Fig. 11

Fig. 12

Fig. 13

Fig. 14

3

REACTANTS
168 170 164 154 162 150 152
160 158a
REACTANTS 166 156 158b

**Fig. 15**

182
150
178
186 184
180
182

**Fig. 16**

194
196
190 192
194

**Fig. 17**